# EUROPÄISCHE PATENTANMELDUNG

(11) **EP 2 669 517 A2**
(43) Veröffentlichungstag der Anmeldung: **04.12.2013**
(21) Anmeldenummer: 13000981.4
(22) Anmeldetag: 27.02.2013
(51) Int. Cl.: F04B 3/00, F01N 3/20, F04B 7/04, F04B 13/00, F04B 17/04, F04B 19/00

(54) **Kolbenpumpe mit umkehrbarer Förderrichtung**

(30) Priorität: 31.05.2012 DE 102012010646
(71) Anmelder: Albonair GmbH, 44263 Dortmund (DE)
(72) Erfinder: Dolenec, Sascha, 59439 Holzwickede (DE); Overhoff, Werner, 45772 Marl (DE)
(74) Vertreter: Patentanwaltskanzlei Methling

(57) **Zusammenfassung**

Die Erfindung betrifft eine Kolbenpumpe mit zumindest einem Zylinder (3), wobei in dem Zylinder (3) der Kolbenpumpe zwei unabhängig voneinander frei bewegliche Kolben (1, 2) angeordnet sind. Ferner betrifft die Erfindung ein Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe gefördert und über zumindest eine Düse in den Abgasstrom des Verbrennungsmotors eingeleitet wird, wobei es sich bei der Dosierpumpe um eine solche Kolbenpumpe handelt.

## Beschreibung

Die Erfindung betrifft eine Kolbenpumpe mit zumindest einem Zylinder. Ferner betrifft die Erfindung ein Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe gefördert und über zumindest eine Düse in den Abgasstrom des Verbrennungsmotors eingeleitet wird.

Katalysatoren zur selektiven katalytischen Reduktion, sogenannte SCR-Katalysatoren (englisch: selective catalyic reduction, abgekürzt: SCR) werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel in das Abgassystem mit einer Dosiervorrichtung eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil gemäß DIN 70070, das sogenannte AdBlue, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion (englisch selective catalyic reduction, SCR) der Ausstoß von Stickoxyden um etwa 90 % reduziert.

Dadurch, dass die üblicherweise eingesetzte 32,5%ige Harnstofflösung bei etwa -11°C gefriert und sich um etwa 10% ausdehnt, können infolge der Ausdehnung der wässrigen Lösung bzw. des Wasseranteils der Lösung Komponenten des Dosiersystems beschädigt werden. Die Problematik des Einfrierens betrifft auch jede andere wässrige Reduktionsmittellösung als die häufig als Reduktionsmittel eingesetzte 32,5%ige Harnstofflösung. Aufgrund des hohen Wasseranteils in der wässrigen Reduktionsmittellösung können somit aufgrund der Anomalie des Wassers bei tiefen Temperaturen Frostschäden auftreten.

Um Beschädigungen von Komponenten des Dosiersystems durch die Ausdehnung infolge eines Einfrierens der Reduktionsmittellösung zu vermeiden, sind die Reduktionsmittel führenden Komponenten in Dosierpausen und insbesondere nach Beendigung der Dosierung von der Reduktionsmittellösung zu befreien.

Ein weiteres Problem besteht darin, dass die Reduktionsmittellösung kristallisieren könnte. Nach Beendigung der Reduktionsmitteleinspritzung muss die Düse daher von Rückständen der Reduktionsmittellösung befreit werden, um zu verhindern, dass diese kristallisieren und die Austrittsöffnung der Düse verstopfen.

Aus der DE 10 2008 013 960 A1 ist es bekannt, mittels Druckluft die Reduktionsmittel führenden Komponenten nach Beendigung der Dosierung zu reinigen. Nachteilig ist dabei, dass ein Ventil benötigt wird, welches den Druckluftzweig mit der Reduktionsmittelleitung beim Belüften verbindet, wobei sich gezeigt hat, dass die Ventile im Zusammenspiel mit Reduktionsmittellösung und Luft nicht zuverlässig arbeiten.

Die Aufgabe der Erfindung ist es, eine Kolbenpumpe derart weiter zu bilden, dass die Förderrichtung der Kolbenpumpe umkehrbar ist, ohne dass aufwändige Ventile und Ventilsteuerungen vorgesehen sein müssen, insbesondere dass eine derartige Kolbenpumpe als Dosierpumpe eines Reduktionsmitteldosiersystem zum Einsatz kommt, deren Förderrichtung nach Beendigung der Dosierung umgekehrt wird, sodass eine Reinigung der Reduktionsmittel führenden Komponenten in Dosierpausen und nach Beendigung der Dosierung erfolgen kann, indem durch die Umkehrung der Förderrichtung diese Komponenten zuverlässig von Rückständen der Reduktionsmittellösung befreit werden, um Frostschäden und Verstopfungen zu verhindern.

Diese Aufgabe wird erfindungsgemäß durch eine Kolbenpumpe gemäß Anspruch 1 sowie ein Reduktionsmitteldosiersystem gemäß Anspruch 13 gelöst. Vorteilhafte Weiterbildungen der Erfindung sind in den abhängigen Ansprüchen angegeben.

Besonders vorteilhaft bei der Kolbenpumpe mit zumindest einem Zylinder ist es, dass in dem Zylinder der Kolbenpumpe zwei unabhängig voneinander frei bewegliche Kolben angeordnet sind.

Durch die Anordnung zweier unabhängig voneinander frei beweglicher Kolben ist es möglich, die Förderrichtung der Pumpe durch eine entsprechende Betätigung der Kolben umzukehren, ohne dass es weiterer Bauteile wie Umschaltventile und dergleichen bedarf. Dass die beiden Kolben in demselben Zylinder unabhängig voneinander frei beweglich sind, bedeutet, dass die beiden Kolben vorzugsweise untereinander nicht kinematisch gekoppelt sind und unabhängig voneinander betätigt werden können.

Bei dem Reduktionsmitteldosiersystem zur Einspritzung eines Reduktionsmitels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe gefördert und über zumindest eine Düse in den Abgasstrom des Verbrennungsmotors eingeleitet wird, ist vorgesehen, dass es sich bei der Dosierpumpe um eine erfindungsgemäße Kolbenpumpe handelt.

Durch die Anordnung einer derartigen Kolbenpumpe, bei der die Förderrichtung umkehrbar ist, kann nach Beendigung der Dosierung das in der Förderleitung zwischen Dosierpumpe und Düse befindliche Reduktionsmittel zurück zum Tank gefördert und die Düse sowie die Förderleitung belüftet werden, um Verstopfungen durch Kristallbildung und Frostschäden vorzubeugen.

Durch wiederholte Förderzyklen in umgekehrter Förderrichtung kann ferner Gas aus dem Abgastrakt angesaugt und hierdurch die gesamte Fördereinrichtung inklusive aller Leitungen und der Förderpumpe selbst entleert werden.

Hierdurch werden sowohl Frostschäden als auch Verstopfungen durch Kristallbildung zuverlässig verhindert. Durch die Umkehrung der Förderrichtung der als Dosierpumpe eingesetzten Kolbenpumpe kann nach Beendigung der Reduktionsmitteleinspritzung die Düse samt Düsenöffnung und die zwischen Dosierpumpe und Düse angeordnete Förderleitung belüftet und von Reduktionsmittelresten befreit werden, die anderenfalls einfrieren oder auskristallisieren und die Düse verstopfen könnten.

Die Begriffe Reduktionsmitteldosiersystem bzw. Dosiersystem werden im Sinne dieser Beschreibung synonym verwendet Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt.

In einer bevorzugten Gesamtanordnung weist das Reduktionsmitteldosiersystem einen Tank auf, in den die Reduktionsmittellösung eingefüllt wird und aus dem die Reduktionsmittellösung entnommen und mittels einer Dosierpumpe gefördert und über zumindest eine Düse in den Abgasstrom des Verbrennungsmotors eingeleitet wird.

In einer bevorzugten Ausführungsform des Reduktionsmitteldosiersystems ist eine Druckluftversorgung vorgesehen, wobei das Reduktionsmittel innerhalb oder außerhalb der Düse mittels Druckluft zerstäubt wird. Zur Zerstäubung des Reduktionsmittels kann eine Mischkammer vorgesehen sein, innerhalb derer eine Zerstäubung des Reduktionsmittels mittels der Druckluft bereits vor der Einleitung in den Abgastrakt erfolgt. In einer bevorzugten Ausführungsform ist jedoch die Düse als außenmischende Zweistoffdüse ausgebildet, bei der aus einer ersten Düsenöffnung die Reduktionsmittellösung austritt und aus einer zweiten Düsenöffnung Druckluft austritt, wobei die beiden Düsenöffnungen derart zueinander ausgerichtet sind, dass die Druckluft das Reduktionsmittel außerhalb der Düse zerstäubt, so dass die Düse als außenmischende Zweistoffdüse ausgebildet ist und die Aerosolbildung außerhalb der Düse erfolgt.

Vorzugsweise erfolgt die Betätigung der beiden Kolben der Kolbenpumpe mittels außerhalb des Zylinders angeordneter Elektromagneten. Mit dem Begriff der Betätigung ist dabei sowohl die Bewegung der Kolben als auch deren Positionierung und das Halten in einer bestimmten Position umfasst. Der Vorteil bei der Nutzung von Elektromagneten ist, dass hierbei eine Ansteuerung der Magneten auf sehr einfache Weise erfolgen kann. Ferner kann bei der Betätigung mittels Elektromagneten auf die Anordnung von Pleueln und dergleichen verzichtet werden, wodurch der Gesamtaufbau insgesamt vereinfacht wird. Alternativ ist jedoch auch eine Betätigung der beiden Kolben durch Pleuel möglich, wobei wie zuvor bereits erläutert die beiden Kolben kinematisch nicht miteinander gekoppelt sind, sondern unabhängig voneinander frei beweglich sind. Eine Betätigung über Pleuel erfolgt dann über entsprechende Stellmotoren, die jeweils auf einen Excenter, an denen ein Pleuel angelenkt ist, einwirken und somit jeweils einen Kolben betätigen, d.h. bewegen und positionieren.

Vorzugsweise erfolgt die Betätigung der beiden Kolben mittels einer Mehrzahl von Spulen, wobei die Spulen abschnittweise einzeln angesteuert werden. Dabei kann die Achse der Spulen, insbesondere mit der Achse des Zylinders übereinstimmen, d.h. die Spulen können außen um den Zylinder herum gelegt sein und/oder in die Zylinderwand integriert sein. Auch können mehrere Spulen unterschiedlichen Außendurchmessers konzentrisch zur Zylinderachse angeordnet sein.

Durch eine Ansteuerung einzelner Abschnitte der Spulen werden Magnetfelder erzeugt. Diese Magnetfelder dienen dazu, die gewünschte Bewegung der Kolben zu erzeugen oder die Kolben in die jeweils gewünschte Position zu bewegen und in dieser zu halten. Mittels derartiger abschnittweise einzeln ansteuerbarer Spulen können somit die entsprechenden Magnetfelder aufgebaut werden, um jeden einzelnen Kolben in der gewünschten Weise zu betätigen, d.h. eine Positionierung des Kolbens vorzunehmen und/oder eine Bewegung des Kolbens herbeizuführen. Die Kolben sind hierzu aus magnetischem Material gebildet oder weisen zumindest einen Anteil an magnetisierbarem Material auf.

Vorzugsweise handelt es sich bei den Kolben um Permanentmagnete. Insbesondere können diese als Permanentmagnete ausgebildeten Kolben derart in dem Zylinder zueinander angeordnet sein, dass sie sich voneinander abstoßen, d.h. dass gleiche Pole der als Permanentmagnete ausgebildeten Kolben in dem Zylinder gegenüber liegen. Diese Abstoßung der als Permanentmagnete ausgebildeten Kolben kann in vorteilhafter Weise für den Betrieb der Kolbenpumpe genutzt werden.

Ferner können an den Enden des Zylinders magnetische Anschläge angeordnet sein, wobei die als Permanentmagnete ausgebildeten Kolben derart in dem Zylinder zueinander angeordnet sind, dass sie sich voneinander sowie von den Enden des Zylinders abstoßen. Das bedeutet, dass zum einen eine magnetische Abstoßungskraft zwischen einem einzelnen Kolben und dem äußeren Ende des Zylinders besteht, sowie eine magnetische Abstoßungskraft zwischen den beiden Kolben in dem Zylinder untereinander besteht. Bei den magnetischen Anschlägen kann es sich um Permanentmagnete oder Elektromagnete handeln.

Vorzugsweise sind der Einlass und der Auslass der Kolbenpumpe durch Bohrungen oder Schlitze in der Zylinderwand gebildet, die mittels der Kolben verschließbar und freigebbar sind.

Durch die Ausbildung des Einlasses und des Auslasses der Kolbenpumpe durch Bohrungen oder Schlitze in der Zylinderwand kann auf die Anordnung eines Einlassventils und eines Auslassventils verzichtet werden, da diese Einlass- und Auslassschlitze je nach Positionierung der beiden Kolben von den Kolben selbst freigegeben oder aber verschlossen werden.

Ein Förderhub der Kolbenpumpe mit den beiden unabhängig voneinander frei beweglichen Kolben innerhalb des Zylinders umfasst dementsprechend folgende Takte:
- Freigeben des Einlasses durch den ersten Kolben, während der Auslass durch den zweiten Kolben verschlossen ist,
- Halten des ersten Kolbens in der den Einlass freigebenden Position,
- Ansaugen des Fluides durch den Einlass mittels des zweiten Kolbens,
- Schließen des Einlasses durch den ersten Kolben,
- Freigeben des Auslasses durch den zweiten Kolben,
- Halten des zweiten Kolbens in der den Auslass freigebenden Position,
- Ausschieben des Fluides durch den Auslass mittels des ersten Kolbens, bis der ersten Kolben einen Minimalabstand zum zweiten Kolben aufweist,
- Verfahren der beiden Kolben mit konstantem Abstand zueinander soweit zurück, bis der erste Kolben den Einlass wieder freigibt, während der zweite Kolben den Auslass verschließt.

Eine Umkehrung der Förderrichtung der Kolbenpumpe ist dabei durch eine entsprechende Ansteuerung und Betätigung der beiden Kolben durchführbar, indem Einlass und Auslass der Pumpe in ihrer Funktion vertauscht werden und die beiden Kolben analog zu den zuvor angegebenen Takten mit vertauschten Rollen betätigt werden.

Zum Vorwärtsfördem werden beide Kolben stirnseitig auf einen minimalen Abstand zusammengefahren und zusammen am Einlass des Zylinders positioniert, sodass der Einlass zwischen den Stirnseiten der Kolben liegt und freigegeben wird. Der zum Ausgangsloch weisende zweite Kolben wird dann in Richtung auf den Auslass bewegt, wodurch das Volumen zwischen den Kolben vergrößert wird und durch den Einlass das Reduktionsmittel über die Saugleitung aus dem Reduktionsmitteltank angesaugt wird. Anschließend wird der am Einlass verweilende erste Kolben ebenfalls in Richtung auf den Auslass bewegt und schiebt aufgrund der Verkleinerung des Volumens zwischen den Kolben das Reduktionsmittel über den Auslass in die Förderleitung zur Düse. Zum wiederholten Ansaugen werden dann beide Kolben unter minimalem Abstand der Kolbenstirnseiten zueinander wieder bis zum Einlass verfahren und die Takte wiederholen sich. Die Wiederholfrequenz bestimmt die Dosiermenge der Pumpe.

Zum Rückwärtsfördern werden beide Kolben stirnseitig auf einen minimalen Abstand zusammengefahren und zusammen am Auslass des Zylinders positioniert, sodass der Auslass zwischen den Stirnseiten der Kolben liegt und freigegeben wird. Der zum Einlass weisende erste Kolben wird dann in Richtung auf den Einlass bewegt, wodurch das Volumen zwischen den Kolben vergrößert wird und durch den Auslass das Reduktionsmittel aus der Förderleitung zurück angesaugt wird. Anschließend wird der am Auslass verweilende zweite Kolben ebenfalls in Richtung auf den Einlass bewegt und schiebt aufgrund der Verkleinerung des Volumens zwischen den Kolben das Reduktionsmittel über den Einlass zurück in die eigentliche Saugleitung und weiter bis zum Tank. Zum wiederholten Ansaugen werden dann beide Kolben unter minimalem Abstand der Kolbenstirnseiten zueinander wieder bis zum Auslass verfahren und die Takte werden so oft wiederholt, bis über die Düse aus dem Abgastrakt angesaugte Luft die gesamte Menge an Reduktionsmittel aus der Düse, Förderleitung, Pumpe und Saugleitung verdrängt hat und das gesamte System somit entleert und damit frostsicher ist.

Der Kern der Erfindung besteht somit darin, dass zwei frei bewegliche Kolben in einem Zylinder angeordnet sind, wobei die Zylinderwand zwei Bohrungen als Einlass und Auslass aufweist. Durch den in zeitlicher Abfolge speziellen Bewegungsablauf der Kolben kann die Pumpe wie zuvor erläutert sowohl vorwärts als auch rückwärts fördern. In der Neutralstellung, also im abgeschalteten und stromlosen Zustand, verschließen die Kolben den Einlass und den Auslass. Die Pumpe sperrt dadurch die Saugleitung zum Tank und die Förderleitung zum Abgastrakt ab. Die Bewegungsabläufe der Kolben werden in einer bevorzugten Ausführungsform durch unterschiedliches Bestromen mehrerer Spulen herbeigeführt.

In der Förderleitung des Dosiersystems kann ferner ein Druck- und/oder Temperatursensor angeordnet sein.

In einer bevorzugten Ausführungsform sind die Rückseiten der beiden Kolben in dem Zylinder belüftet. Durch die Belüftung der Rückseiten der Kolben in dem Zylinder sind diese unabhängig von etwaigen Fluidkräften ausschließlich durch die magnetischen Kräfte betätigbar.

Alternativ ist jedoch auch möglich, dass die Rückseiten der Kolben nicht belüftet sind, so dass das eingeschlossene Gasvolumen einen Puffer bildet und somit anstelle eines magnetischen Anschlages durch die komprimierte Luft ein Gaspuffer gebildet wird, der aufgrund der Verdichtung des Gases eine entsprechende Rückstellkraft auf den Kolben ausübt und eine entsprechende Positionierung der beiden Kolben bei Abschaltung der Kolbenpumpe und dem sich einstellenden Kräftegleichgewicht innerhalb des Zylinders bewirken.

Vorzugsweise sind der Einlass und der Auslass der Kolbenpumpe im stromlosen Zustand durch die beiden Kolben verschlossen. Dadurch, dass Einlass und Auslass der Kolbenpumpe verschlossen sind, ist dementsprechend bei einem Einsatz der Kolbenpumpe als Dosierpumpe in einem Reduktionsmitteldosiersystem gewährleistet, dass keine Reduktionsmittellösung im abgeschalteten Zustand in die Förderleitung zur Düse hin gelangen kann.

Ein Ausführungsbeispiel der Erfindung ist in den Figuren dargestellt und wird nachfolgend erläutert. Es zeigen:
- Fig. 1: eine schematische Darstellung eines Ausführungsbeispiels einer Kolbenpumpe im Schnitt;
- Fig. 2: die Kolbenpumpe nach Fig. 1 in der Gleichgewichtslage im abgeschalteten Zustand;
- Fig. 3 - 9: die Kolbenpumpe nach Fig. 1 zu verschiedenen Zeitpunkten während eines Förderzyklus bei Vorwärtsförderung;
- Fig. 10 - 13: die Kolbenpumpe nach Fig. 1 zu verschiedenen Zeitpunkten bei umgekehrter Förderrichtung.

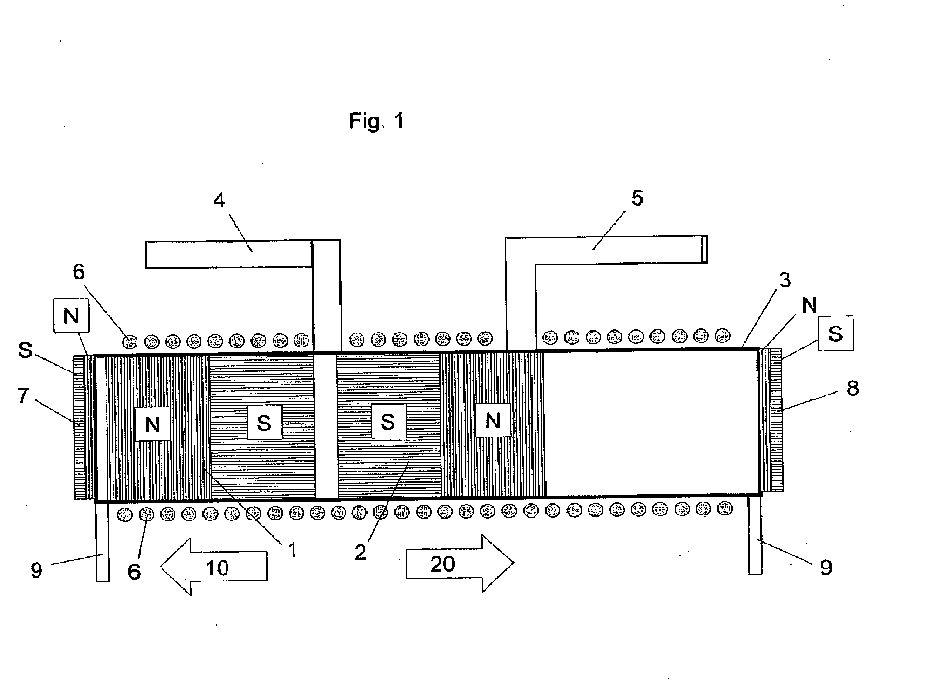

In den Figuren sind identische Bauteile mit identischen Bezugszeichen versehen. In Fig.1 ist dargestellt ein Ausführungsbeispiel einer Kolbenpumpe im Schnitt. Es sind zwei Kolben 1 und 2 in dem Zylinder 3 frei beweglich angeordnet. Die Kolben 1 und 2 sind untereinander nicht kinematisch gekoppelt, sondern sind entlang der Zylinderachse des Zylinders 3 unabhängig voneinander verschiebbar. Der Zylinder 3 weist an seiner Seite den Einlass 4 sowie den Auslass 5 auf. Einlass 4 und Auslass 5 münden jeweils in Bohrungen auf der Oberfläche des Zylinders 3, wobei der Einlass 4 und der Einlass 5 durch die beiden Kolben 1 und 2 je nach Positionierung der Kolben 1, 2 verschlossen oder freigegeben werden.

Bei den Kolben 1, 2 handelt es sich um Permanentmagnete, die derart zueinander in dem Zylinder 3 angeordnet sind, dass sich die Südpole S in dem Zylinder 3 gegenüber liegen, so dass sich die Kolben 1, 2 aufgrund der sich gegenüber liegenden identischen Südpole S der Permanentmagnete voneinander abstoßen. Die Nordpoie N der beiden Kolben 1, 2 sind zu den jeweiligen Zylinderenden des Zylinders 3 hin orientiert.

An den Enden des Zylinders 3 sind magnetische Anschläge 7, 8 vorgesehen, die ebenfalls durch Permanentmagnete gebildet werden. Der Permanentmagnet 7 ist dabei so orientiert, dass sich wiederum die Nordpole N des magnetischen Anschlags 7 und des Kolbens 1 gegenüber liegen, so dass sich der Kolben 1 von dem Zylinderende und dem magnetischen Anschlag 7 abstößt.

Der magnetische Anschlag 8 ist ebenfalls durch einen Permanentmagneten gebildet, der derart orientiert ist, dass sich der Nordpol des magnetischen Anschlags 8 und der Nordpol des Kolbens 2 gegenüber liegen, so dass der Kolben 2 sich von dem magnetischen Anschlag 8 am Ende des Zylinders 3 abstößt.

Die Rückseiten der Kolben 1, 2 weisen jeweils eine Entlüftung 9 auf, durch die Luft aus dem rückseitigen Raum zwischen den Kolben 1, 2 und dem Anschlag 7, 8 des Zylinders entweichen oder durch die Entlüftung 9 in diesen Raum hineinströmen kann, so dass keine zusätzlichen Über- oder Unterdrücke auf den Rückseiten der Kolben 1, 2 aufgebaut werden.

Der Zylinder 3 ist umgeben von Magnetspulen 6, deren Segmente abschnittweise einzeln ansteuerbar sind. Die Magnetspule 6 weist mehrere axiale Abschnitte, d. h. Segmente auf, die einzeln betätigbar sind. Die Achse der Magnetspule 6 entspricht der Achse des Zylinders 3. In der schematischen Darstellung nach den Figuren befindet sich die Spule 8 außerhalb des Zylinders 3. Es ist auch möglich, diese Spule 6 in die Zylinderwandung einzubetten.

Durch eine segmentweise oder abschnittweise Ansteuerung der Magnetspule 6 können entsprechende Magnetfelder erzeugt werden, welche entsprechende resultierende Kräfte auf die Kolben 1, 2 bewirken. Die durch eine Ansteuerung der Magnetspulen 6 sowie aufgrund der magnetischen Kräfte zwischen den Kolben 1, 2 untereinander sowie den magnetischen Anschlägen 7, 8 an den Enden des Zylinders resultierenden Kräfte sind angedeutet durch die Pfeile 10, 20. Durch den Pfeil 10 ist jeweils angegeben die resultierende magnetische Kraft auf den Kolben 1. Durch den Pfeil 20 ist in den Figuren die resultierende magnetische Kraft 20, die auf den Kolben 2 einwirkt, angegeben.

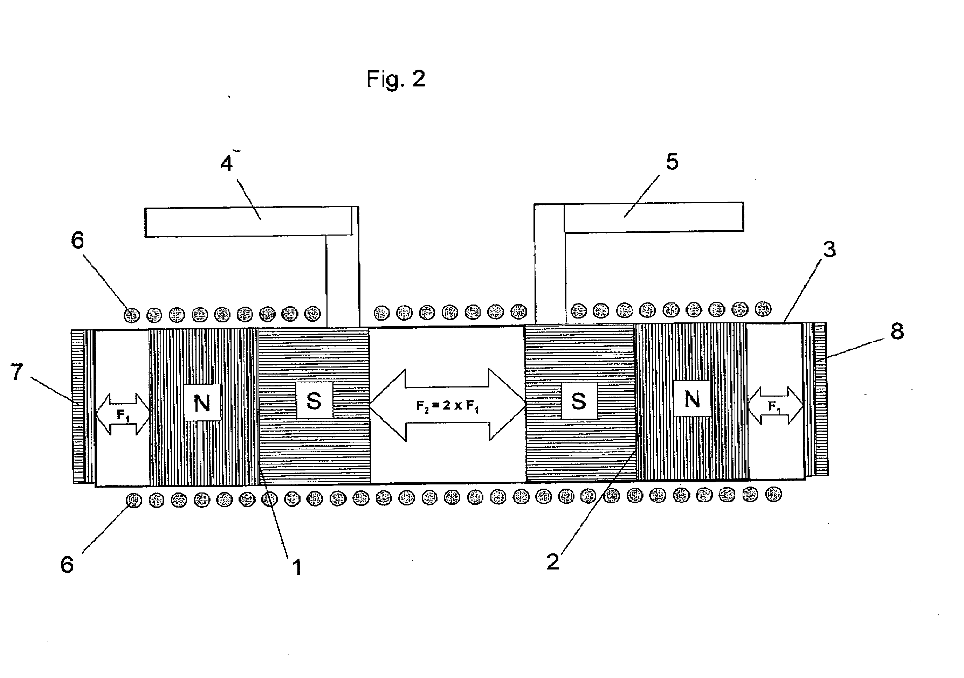

In Fig. 2 ist dargestellt die Kolbenpumpe nach Fig. 1 in der Gleichgewichtslage in abgeschaltetem Zustand. In dem in Fig. 2 dargestellten Zustand ist die Magnetspule 6 durchgehend stromlos, so dass nur die zwischen den magnetischen Anschlägen 7, 8 und den Kolben 1, 2 auftretenden magnetischen Abstoßungskräfte wirksam sind.

Zwischen dem magnetischen Anschlag 7 und dem Kolben 1 stellt sich die Abstoßung mit der Kraft F1 ein, wie dies durch den Doppelpfeil zwischen dem magnetischen Anschlag 7 und dem Kolben 1 angedeutet ist. Auf der anderen Seite stellt sich die selbe Abstoßungskraft F1 zwischen dem Kolben 2 und dem magnetischen Anschlag 8 ein. Die Abstoßung zwischen dem ersten Kolben 1 und dem linken magnetischen Anschlag 7 resultiert aus der Tatsache, dass sich die Nordpole N der beiden Permanentmagnete gegenüberliegen. Die Abstoßung zwischen dem zweiten Kolben 2 und dem rechten magnetischen Anschlag 8 resultiert aus der Tatsache, dass sich hier ebenfalls die Nordpole N der beiden Permanentmagnete gegenüberliegen.

Aufgrund der sich gegenüber liegenden Südpole S der beiden Kolben 1 und 2 stellt sich zwischen den beiden Kolben 1, 2 die Abstoßungskraft F2 = 2 x F1 ein. Im abgeschalteten Zustand befindet sich somit die Kolbenpumpe in der in Fig. 2 dargestellten Gleichgewichtslage. Wie in Fig. 2 erkennbar ist, wird dabei der Einlass 4 durch den Kolben 1 verschlossen. Ferner wird der Auslass 5 durch den Kolben 2 verschlossen. Es ist somit in dem abgeschalteten Zustand gemäß Fig. 2 unmöglich, dass Fluid aus dem Einlass 4 zum Auslass 5 gelangt, da Einlass 4 und Auslass 5 durch die beiden Kolben 1, 2 verschlossen sind und die Kolben sich aufgrund der magnetischen Kräfte F1, F2 nicht aus dieser Gleichgewichtslage heraus bewegen.

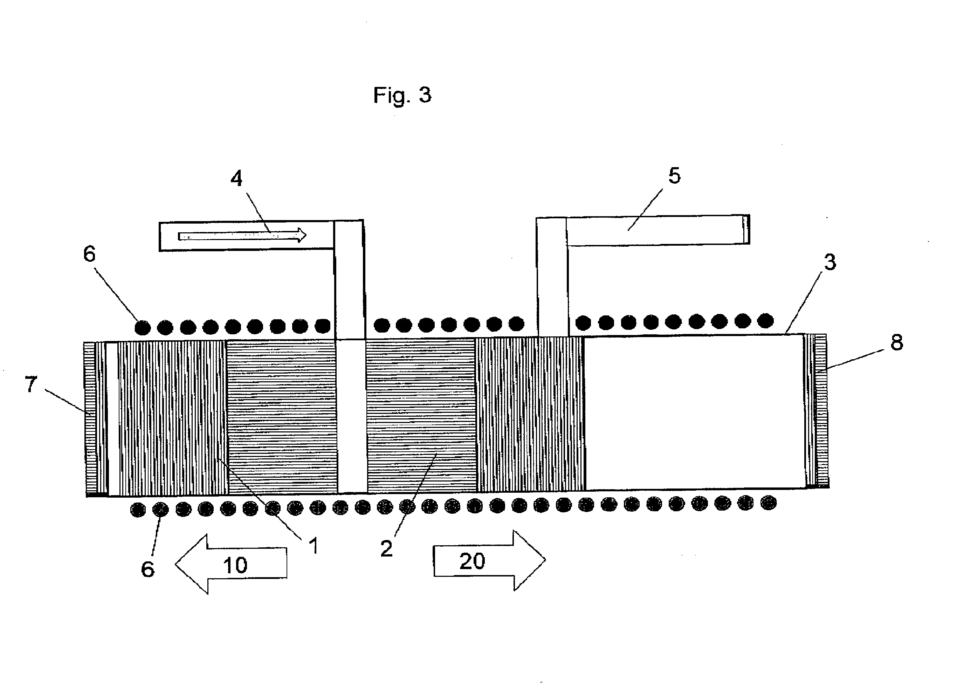

Ein Förderzyklus der Kolbenpumpe wird nachfolgend anhand der Figuren 3 bis 9 erläutert. In den Figuren ist durch die Pfeile 10, 20 die jeweils resultierende magnetische Kraft auf die Kolben 1, 2 angegeben. Diese resultierende magnetische Kraft 10, 20 ergibt sich aus der Überlagerung der magnetischen Kräfte der Kolben 1, 2 untereinander sowie die Abstoßung von den magnetischen Anschlägen 7, 8 und ferner die durch die Spule 6 durch entsprechende Ansteuerung einzelner Segmente der Spule 6 erzeugten Magnetfelder. Mit dem Pfeil 10 ist jeweils die auf den ersten Kolben 1 einwirkende resultierende magnetische Kraft bezeichnet und die Wirkrichtung dieser Kraft angegeben. Mit dem Pfeil 20 ist jeweils die auf den zweiten Kolben 2 resultierende magnetische Kraft sowie deren Wirkrichtung angegeben.

Zu Beginn eines Förderzyklus wird der Kolben 1 so weit zurück verlagert, dass der Einlass 4 durch den Kolben 1 freigegeben wird. Zu Beginn des Zyklus, wie er in Fig. 3 dargestellt ist, liegt der zweite Kolben 2 mit einem minimalen Abstand dem ersten Kolben 1 gegenüber und wird sodann entsprechend der Pfeilrichtung 20 vom ersten Kolben 1 wegbewegt, so dass ein Ansaugen des Fluides durch den Einlass 4 durch den zweiten Kolben 2 ausgeführt wird. Während des Ansaugvorgangs wird der erste Kolben 1 in der den Einlass 4 freigebenden Position gehalten.

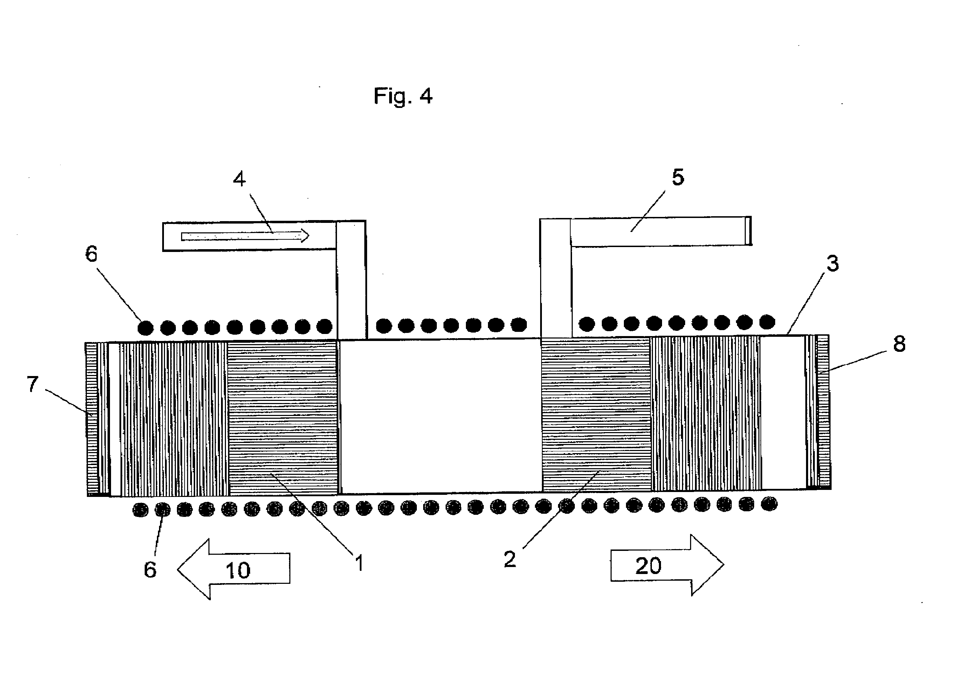

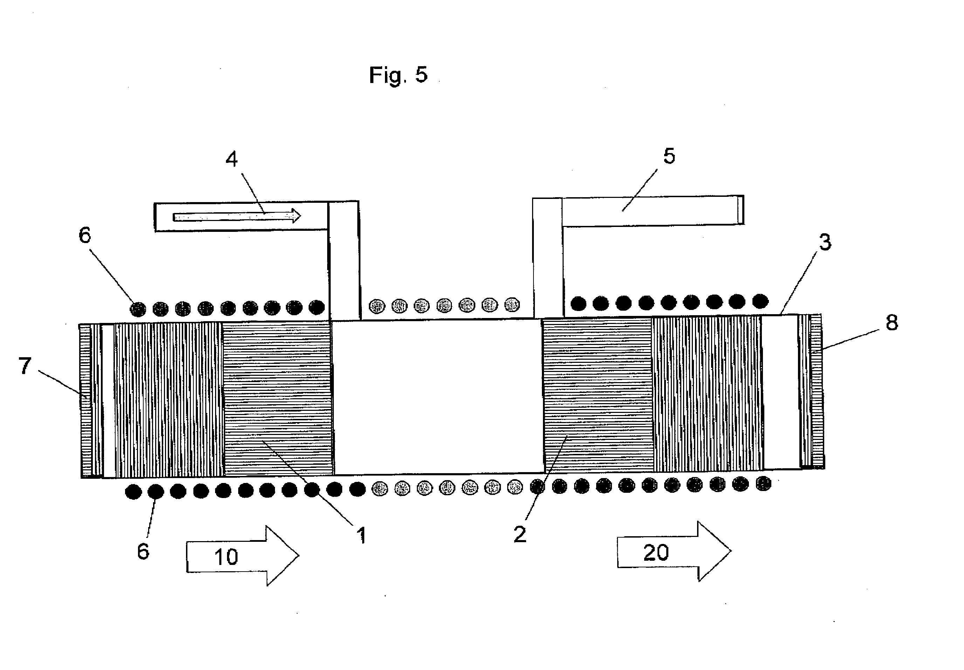

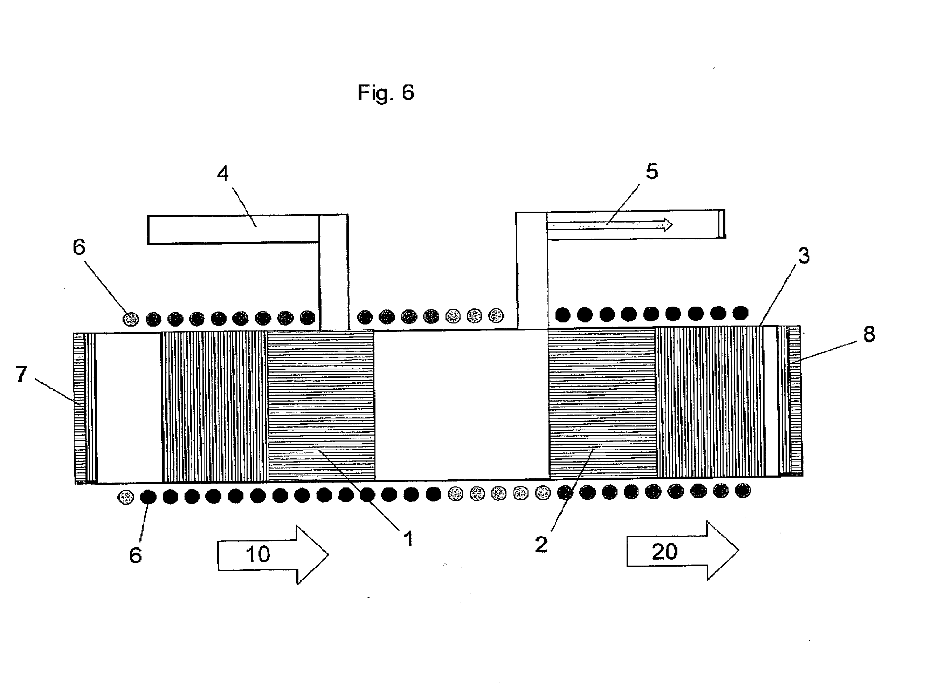

In der in Fig. 4 dargestellten Position ist das Ansaugen des Fluides durch den Einlass 4 mittels des zweiten Kolbens 2 nahezu abgeschlossen. Der zweite Kolben 2 wird nun, wie in Fig. 5 ersichtlich, weiterbewegt, so dass der Auslass 5 durch den zweiten Kolben 2 freigegeben wird, so lange bis der Auslass 5 durch den Kolben 2 vollständig freigegeben ist. Der zweite Kolben 2 wird sodann in dieser den Auslass 5 freigebenden Position gehalten und der erste Kolben 1 wird, wie in Fig. 6 dargestellt, auf den Kolben 2 zubewegt, so dass das Fluid aus dem Zylinder 3 über den Auslass 5 ausgeschoben wird. Die Fluidströmungsrichtung ist jeweils durch Pfeile im Einlass 4 bzw. Auslass 5 angedeutet.

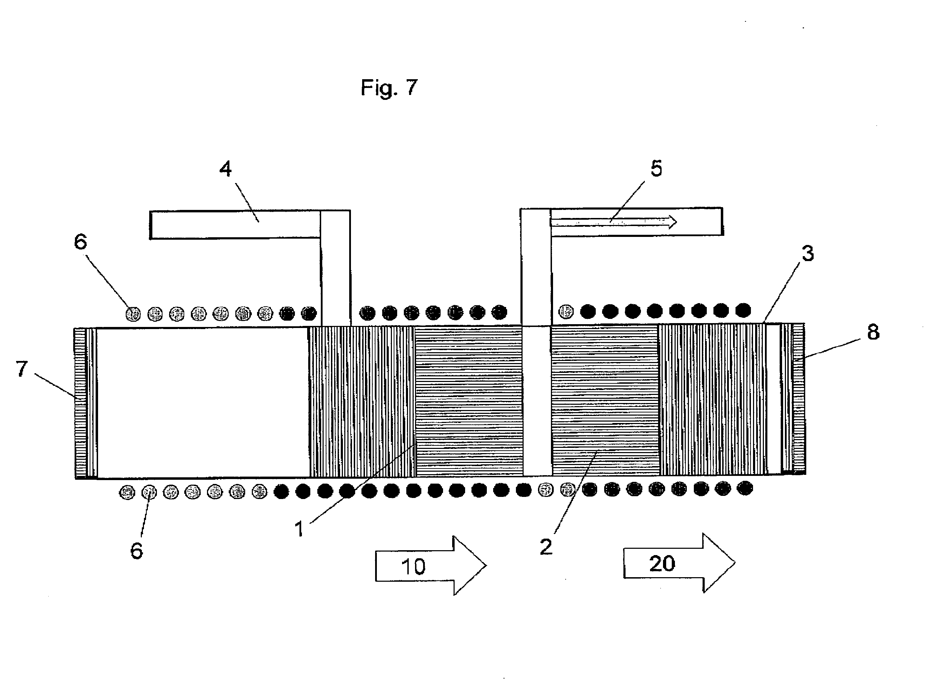

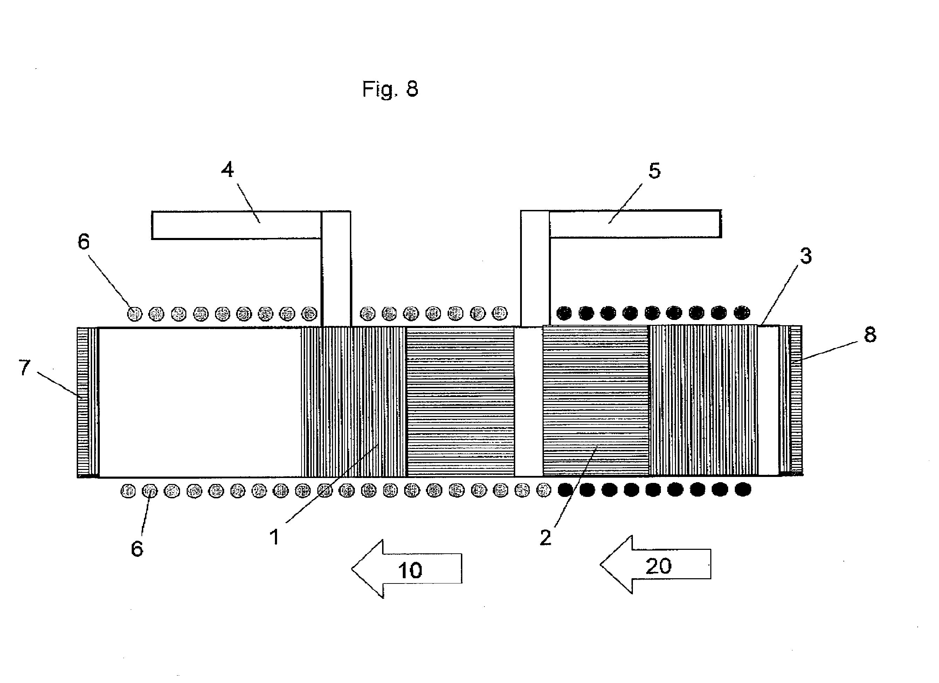

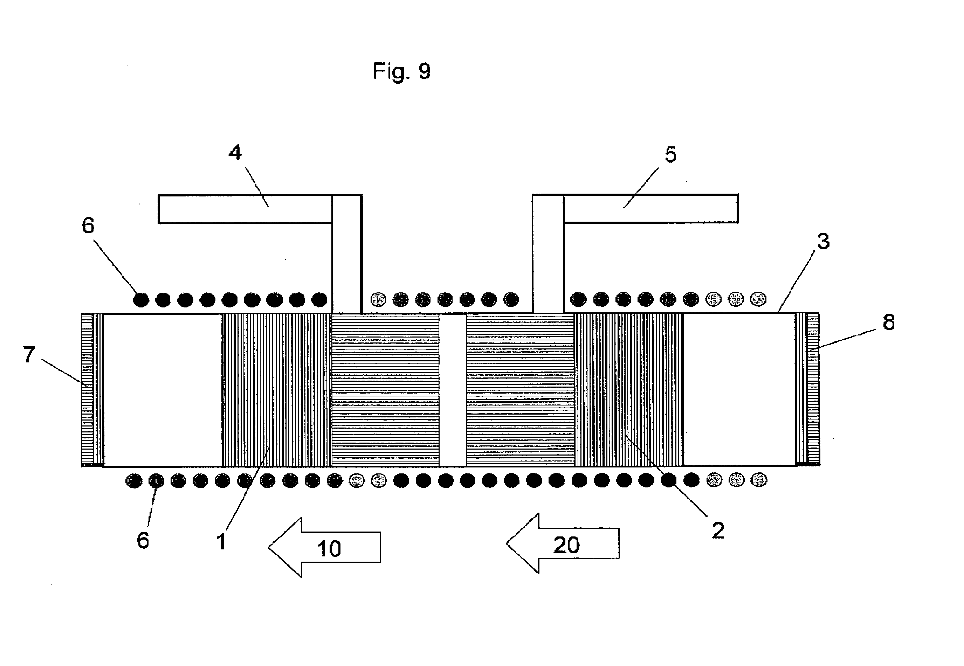

Der erste Kolben 1 wird so lange auf den zweiten Kolben 2 zubewegt, bis das Fluid aus dem Zylinder 3 über den Auslass 5 vollständig ausgeschoben ist und der erste Kolben 1 einen minimalen Abstand zum zweiten Kolben 2 einnimmt, wie dies in Fig. 7 erkennbar ist. Nach dem Ausschieben des Fluides aus dem Zylinder 3 über den Auslass 5 werden die beiden Kolben 1, 2, wie in Fig. 8 dargestellt, unter Beibehaltung des minimalen Abstandes gleichzeitig zurück in die Ausgangsposition bewegt, wie dies in Fig. 9 erkennbar ist und es schließt sich ein weiterer Zyklus beginnend ab der Kolbenpositionierung, wie in Fig. 3 angegeben, an, indem der erste Kolben 1 so weit zurückverfahren wird, bis der Einlass 4 durch den ersten Kolben 1 wieder freigegeben wird und anschließend ein Ansaugen durch den zweiten Kolben 2 erfolgen kann.

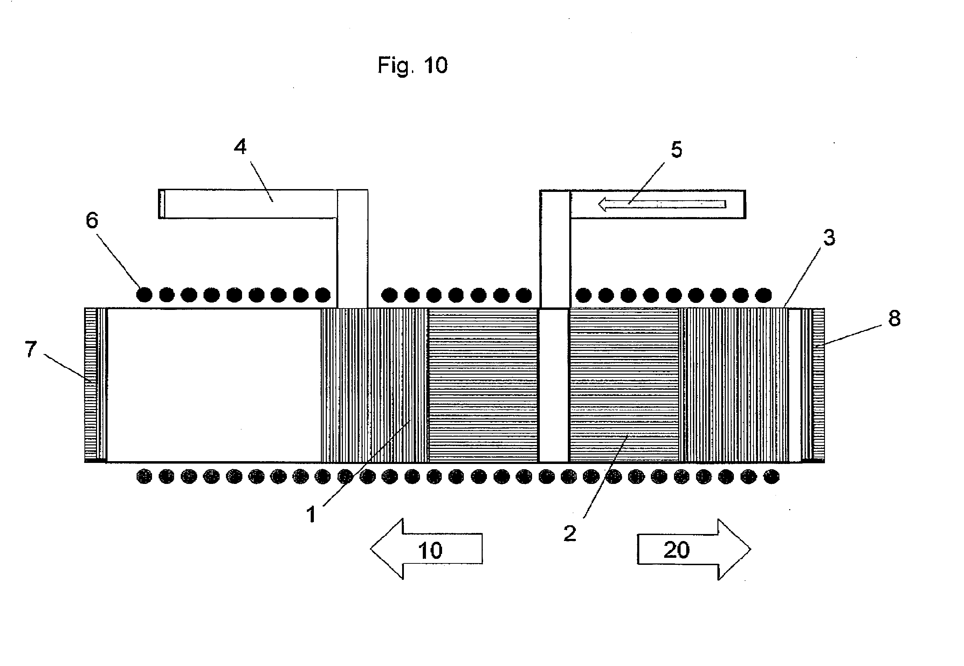

Die Umkehrung der Förderrichtung der Kolbenpumpe wird nachfolgend anhand der Figuren 10 bis 13 erläutert.

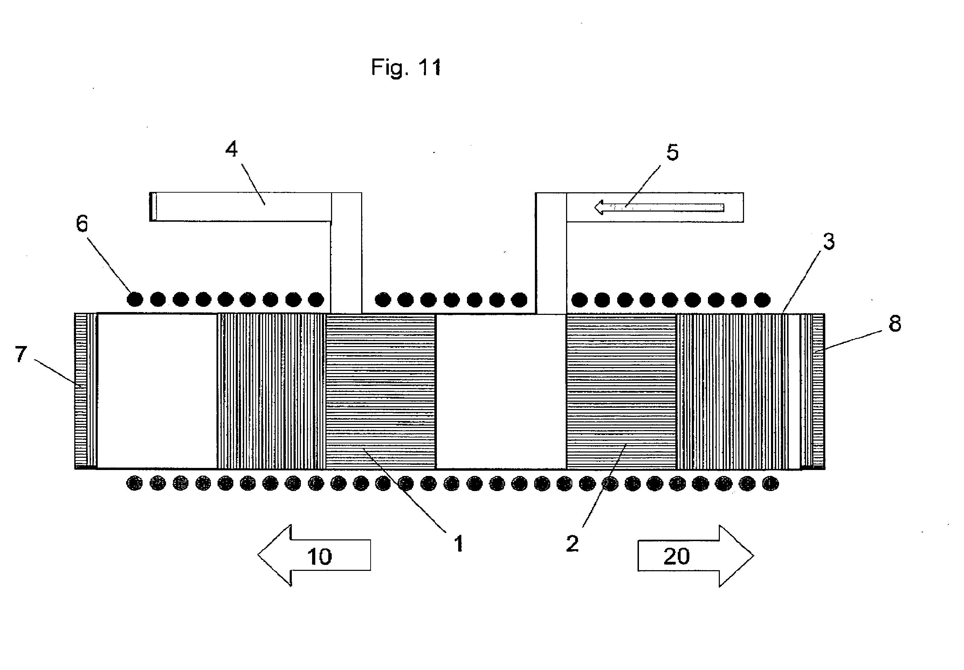

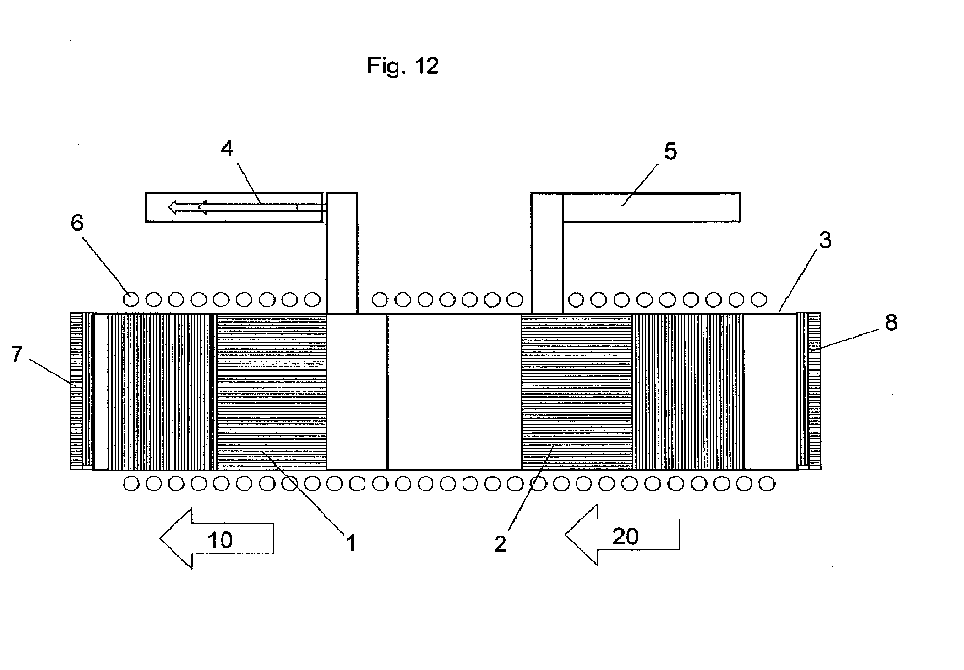

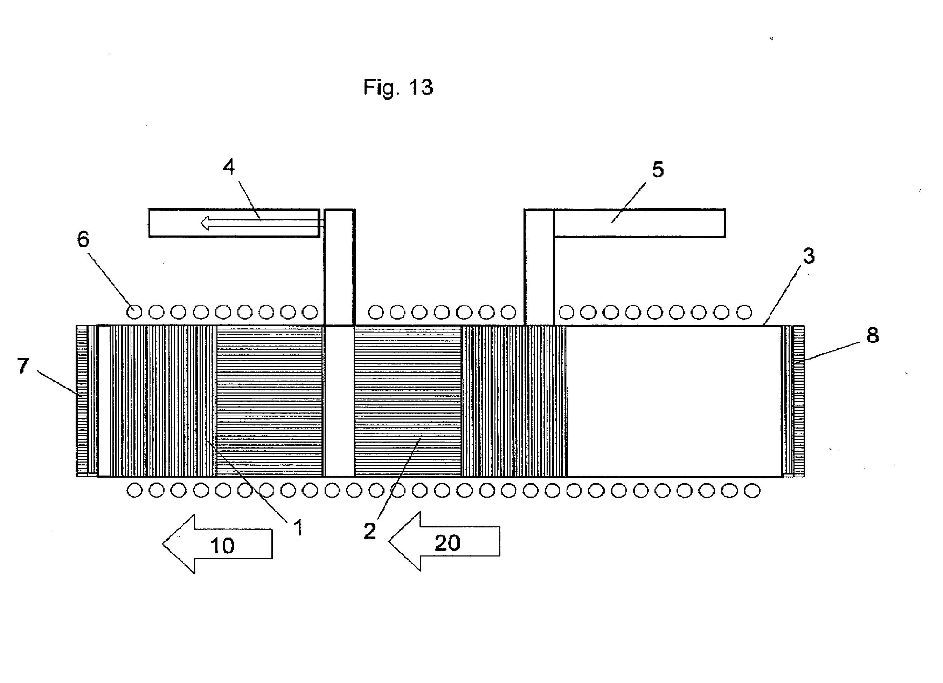

Fig. 10 zeigt die Position der beiden Kolben 1, 2 zum Ende eines Förderzyklus, nachdem das Fluid aus dem Zylinder 3 über den Auslass 5 ausgeschoben wurde. Soll nunmehr die Förderrichtung der Kolbenpumpe umgekehrt werden, wird der zweite Kolben 2 in der den Auslass freigegebenen Position festgehalten, wie dies durch den Pfeil 20 angedeutet ist. Sodann wird der erste Kolben 1, wie durch den Pfeil 10 in Fig. 10 angedeutet, zurückbewegt, so dass die Förderrichtung des Fluides, wie durch den Pfeil in dem Auslass 5 angedeutet, umgekehrt wird, da der erste Kolben 1 nunmehr dazu dient, das Fluid über den Auslass 5 aus der dem Auslass nachgeschalteten Förderleitung in den Zylinder 3 zurückzusaugen, wie dies in Fig. 11 erkennbar ist. Aufgrund der Vergrößerung des Volumens innerhalb des Zylinders 3 bei zurückweichendem ersten Kolben 1 wird das in der Förderleitung hinter dem Auslass 5 befindliche Fluid in den Zylinder 3 zurückgesaugt. Der erste Kolben 1 wird weiter entsprechend der Pfeilrichtung 10 zurückbewegt, so lange bis der Auslass 4 durch den Kolben 1 freigegeben wird. Sodann wird der erste Kolben 1 in der den Auslass 4 freigebenden Position festgehalten, wie dies in Fig. 12 erkennbar ist und der zweite Kolben 2 dient dazu, das in dem Zylinder 3 befindliche Fluid über den Einlass 4 entgegen der ursprünglichen Förderrichtung auszuschieben, wie dies durch den Pfeil 20, welcher die resultierende Magnetkraft auf den zweiten Kolben 2 abbildet, dargestellt ist. In Fig. 13 ist erkennbar das Ende des Förderzyklus der Pumpe bei umgekehrter Förderrichtung.

Es besteht nunmehr die Möglichkeit beide Kolben 1, 2 wiederum unter Beigehaltung des minimalen Abstandes so weit zurück zu verfahren, bis der zweite Kolben 2 den Auslass 5 wieder freigibt und einen Förderzyklus in umgekehrter Förderrichtung erneut anzuschließen, so dass über die Düse und die Förderleitung des Reduktionsmitteldosiersystems Gas aus dem Abgastrakt angesaugt werden kann, um die gesamte Fördereinrichtung inklusive der Pumpe vollständig zu entleeren und hierdurch frostsicher zu machen.

Nach Entleerung der gesamten Fördereinrichtung sowie der Kolbenpumpe selbst können die Magnetspulen 6 abgeschaltet werden und es stellt sich die in Fig. 2 abgebildete Gleichgewichtslage der Kolben 1, 2 in dem Zylinder 3 ein. In dieser Gleichgewichtslage sind der Einlass 4 durch den ersten Kolben 1 und der Auslass 5 durch den zweiten Kolben 2 verschlossen.

Bei einer nicht dargestellten alternativen Ausführungsform der Kolbenpumpe sind die beiden Kolben kinematisch gekoppelt. Eine solche kinematische Kopplung der beiden Kolben in dem Zylinder kann mittels Pleueln realisiert werden, welche über Kurvenscheiben umgelenkt werden. Eine Umkehrung der Förderrichtung wird dabei durch eine Drehrichtungsänderung herbeigeführt. Es erfolgt vorzugsweise eine Zwangssteuerung mittels Kurvenscheibe sowohl für die Vorwärtsbewegung als auch für die Rückwärtsbewegung der Kolben. Alternativ dazu kann die Steuerung der Kolben derart erfolgen, dass eine Zwangssteuerung der Kolben nur in eine Richtung erfolgt und die Gegenbewegung der Kolben mittels hydraulischer Kräfte und/oder mittels einer Federkraft auf den jeweiligen Kolben herbeigeführt wird.

## Patentansprüche

1. Kolbenpumpe mit zumindest einem Zylinder (3), **dadurch gekennzeichnet, dass** in dem Zylinder (3) der Kolbenpumpe zwei unabhängig voneinander frei bewegliche Kolben (1, 2) angeordnet sind.

2. Kolbenpumpe nach Anspruch 1, **dadurch gekennzeichnet, dass** die Betätigung der beiden Kolben (1, 2) mittels außerhalb des Zylinders (3) angeordneter Elektromagneten erfolgt.

3. Kolbenpumpe nach Anspruch 1 oder 2, **dadurch gekennzeichnet, dass** die Betätigung der beiden Kolben (1, 2) mittels einer Mehrzahl von Spulen (6) erfolgt, wobei die Spulen (6) abschnittweise einzeln angesteuert werden, insbesondere deren Achsen mit der des Zylinders (3) übereinstimmen.

4. Kolbenpumpe nach einem der vorherigen Ansprüche, **dadurch gekennzeichnet, dass** es sich bei den Kolben (1, 2) um Permanentmagnete handelt.

5. Kolbenpumpe nach einem der vorherigen Ansprüche, **dadurch gekennzeichnet, dass** es sich bei den Kolben (1, 2) um Permanentmagnete handelt, die derart in dem Zylinder (3) zueinander angeordnet sind, dass sie sich abstoßen.

6. Kolbenpumpe nach einem der vorherigen Ansprüche, **dadurch gekennzeichnet, dass** es sich bei den Kolben (1, 2) um Permanentmagnete handelt und an den Enden des Zylinders (3) magnetische Anschläge (7, 8)
angeordnet sind, wobei die Kolben (1, 2) derart in dem Zylinder (3) zueinander angeordnet sind, dass sie sich voneinander und von den Enden des Zylinders (3) abstoßen.

7. Kolbenpumpe nach Anspruch 6, **dadurch gekennzeichnet, dass** es sich bei den magnetischen Anschlägen (7, 8) um Permanentmagnete oder Elektromagnete handelt.

8. Kolbenpumpe nach einem der vorherigen Ansprüche, **dadurch gekennzeichnet, dass** Einlass (4) und Auslass (5) der Kolbenpumpe durch Bohrungen oder Schlitze in der Zylinderwand (3) gebildet sind, die mittels der Kolben (1, 2) verschließbar und freigebbar sind.

9. Kolbenpumpe nach einem der vorherigen Ansprüche, **dadurch gekennzeichnet, dass** ein Förderhub der Kolbenpumpe folgende Takte umfasst:
• Freigeben des Einlasses (4) durch den ersten Kolben (1),
• Halten des ersten Kolbens (1) in der den Einlass (4) freigebenden Position,
• Ansaugen des Fluides durch den Einlass (4) mittels des zweiten Kolbens (2),
• Schließen des Einlasses (4) durch den ersten Kolben (1),
• Freigeben des Auslasses (5) durch den zweiten Kolben (2),
• Halten des zweiten Kolbens (2) in der den Auslass (5) freigebenden Position,
• Ausschieben des Fluides durch den Auslass (5) mittels des ersten Kolbens (1), bis der ersten Kolben (1) einen Minimalabstand zum zweiten Kolben (2) aufweist,
• Verfahren der beiden Kolben (1, 2) mit konstantem Abstand zueinander soweit zurück, bis der erste Kolben (1) den Einlass (4) wieder freigibt, während der zweite Kolben (2) den Auslass (5) verschließt.

10. Kolbenpumpe nach einem der vorherigen Ansprüche, **dadurch gekennzeichnet, dass** eine Umkehrung der Förderrichtung durch eine entsprechende Ansteuerung und Betätigung der Kolben (1, 2) durchführbar ist, indem Einlass (4) und Auslass (5) der Pumpe in ihrer Funktion getauscht werden.

11. Kolbenpumpe nach einem der vorherigen Ansprüche, **dadurch gekennzeichnet, dass** die Rückseiten der beiden Kolben (1, 2) in dem Zylinder (3) belüftet sind.

12. Kolbenpumpe nach einem der vorherigen Ansprüche, **dadurch gekennzeichnet, dass** der Einlass (4) und der Auslass (5) im abgeschalteten, insbesondere stromlosen Zustand der Kolbenpumpe durch die beiden Kolben (1, 2) verschlossen sind.

13. Reduktionsmitteldosiersystem zur Einspritzung eines Reduktionsmittels in den Abgasstrom eines Verbrennungsmotors zur selektiven katalytischen Reduktion, wobei das Dosiersystem mit einem Reduktionsmitteltank verbindbar/verbunden ist, aus dem Reduktionsmittel entnommen und mittels einer Dosierpumpe gefördert und über zumindest eine Düse in den Abgasstrom des Verbrennungsmotors eingeleitet wird, **dadurch gekennzeichnet, dass** es sich bei der Dosierpumpe um eine Kolbenpumpe nach einem der vorherigen Ansprüche handelt.
